# EUROPÄISCHE PATENTSCHRIFT

(11) **EP 4 463 637 B1**
(45) Veröffentlichungstag und Bekanntmachung des Hinweises auf die Patenterteilung: **17.09.2025**
(21) Anmeldenummer: 23702531.7
(22) Anmeldetag: 12.01.2023
(51) Int. Cl.: F16B 25/00

(54) **SCHRAUBE MIT EINER LOCHBILDENDEN SPITZE**
SCREW WITH A HOLE-FORMING TIP
VIS COMPORTANT UNE POINTE DE FORMATION DE TROU

(30) Priorität: 12.01.2022 DE 102022100651
(43) Veröffentlichungstag der Anmeldung: 20.11.2024
(73) Patentinhaber: EJOT SE & Co. KG, 57319 Bad Berleburg (DE)
(72) Erfinder: STOLL, Helmut, 58313 Herdecke (DE)
(74) Vertreter: Puschmann Borchert Kaiser Klettner Patentanwälte Partnerschaft mbB
(86) Internationale Anmeldenummer: PCT/EP2023/050658
(87) Internationale Veröffentlichungsnummer: WO 2023/135222

(56) Entgegenhaltungen:
- EP-A2- 1 903 224
- DE-U1- 202007 018 179
- US-A1- 2017 122 357

## Beschreibung

Die Erfindung betrifft eine Schraube insbesondere zur Verschraubung in porösem Werkstoff, insbesondere in Holz, mit einer lochbildenden Spitze gemäß dem Oberbegriff des Anspruchs 1.

Bei Holzschrauben, die ohne Vorbohrung in einer Holzkonstruktion verschraubt werden, kann es dazu kommen, dass das Holz durch den Lochherstellungsvorgang durch die Schraube gespalten wird. Dies kann geschehen, da durch den Lochbildungsvorgang entstehende Späne zu einer lokalen Verdichtung führen können, was die während des Einschraubvorgangs erzeugten Radialkräfte erhöht. Solch eine Spaltwirkung entsteht auch bei Schrauben mit einer Gewindespitze, da in dem Material, welches beim Eindrehen der Schraube durch das Volumen der eingedrehten Schraube verdrängt wird, eine Vorspannung aufgebaut wird, die in einem faserigen Werkstoff wie Holz zu einer Spaltwirkung führt.

Zur Verankerung einer Schraube in Holz sind unterschiedliche Ansätze bekannt, die die Spaltneigung reduzieren sollen.

Die DE 20 2007 018 179 U1 zum Beispiel offenbart eine Schraube zur Verankerung in Holz, die über ihre Spitze eine Schabenut aufweist, die ein sofortiges Greifen des Gewindes in das Holz begünstigt und andererseits das Spalten des Holzes verhindern soll.

Die EP 1 903 224 A2 offenbart eine Schraube, die eine außermittige Spitze aufweist, die mit einer Ausnehmung versehen ist, wobei zwei seitlich liegende Schneidkanten über Schabeflächen verbunden sind. Die Schabeflächen laufen am kopfseitigen Ende der Spitze - am Übergang zum Schaft - in einer Ebene, die im 57122spitzen Winkel zur Normalen der Schraubenachse liegt, aus. Durch den geneigten Übergang kann von der Schneidspitze abgetragenes Material aus der Ausnehmung der Schneidspitze hinaustreten. Dies reduziert die Spaltneigung des Holzes beim Einschraubvorgang.

Es soll eine Schraube zur selbstbohrenden Verschraubung in Holz geschaffen werden, bei der die Spaltwirkung während des Einschraubens gegenüber den bekannten Schrauben weiter reduziert wird. Dies geht einher mit der Reduzierung des Drehmoments während des Einschraubvorgangs, das als Maß für die spaltwirkenden Radialkräfte angenommen werden kann.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterentwicklungen der Erfindung.

Der Erfindung liegt die Erkenntnis zu Grunde, dass gerade bei weicheren Hölzern, die eine eher geringe Rohdichte aufweisen, die Spaltwirkung reduziert werden kann, indem die Holzmatrix lokal plastisch verformt werden kann und nicht geschnitten oder komprimiert werden muss.

Die erfindungsgemäße Schraube weist in bekannter Weise einen Schaft auf, der in seinem tragenden Bereich einen Kerndurchmesser besitzt. Der Schaft geht in eine Spitze über. Die Spitze verjüngt sich ausgehend vom tragenden Teil des Schafts und endet in einer vordersten Spitze, wobei die vorderste Spitze auf der Schraubenmittelachse liegt. Die Schraube besitzt ein Gewinde zur Verschraubung mit einem Bauteil in einer Einschraubdrehrichtung, wobei sich das Gewinde bis in die Spitze erstreckt. Das Gewinde erstreckt sich abschnittsweise bevorzugt in den vorderen Bereich der Spitze, insbesondere bis in die vorderste Spitze.

An der Spitze sind, durch eine Ausnehmung der Schraube, wenigstens zwei Kanten, nämlich eine erste Kante, die beim Eindrehen der Schraube zuerst, insbesondere verdrängend, greift, und eine zweite Kante, die nachfolgend, insbesondere stützend, wirkt, gebildet, die in und entgegen der Einschraubdrehrichtung angeordnet sind. So liegt die erste Kante in Einschraubdrehrichtung der Schraube am Übergang von der Mantelfläche der Schraube zur Ausnehmung, so dass der an die Kante angrenzende Bereich einer durch die Ausnehmung gebildeten Fläche im Wesentlichen in Einschraubdrehrichtung zeigt. Die zweite Kante liegt am Schraubenkörper entgegen der Einschraubdrehrichtung im Übergang, von der Mantelfläche zur Ausnehmung, so dass der an die Kante angrenzende Bereich der durch die Ausnehmung gebildeten Fläche entgegen der Drehrichtung zeigt. Die Kanten können sich auch bis in den Tragbereich, insbesondere den zylindrischen Teil des Schafts, hinein erstrecken. Weiter ist an der Schraube eine Schraubenmittelebene definiert, wobei die Kanten beidseitig der Schraubenmittelebene liegend angeordnet sind. Die Schraubenmittelebene beinhaltet die Schraubenmittelachse und liegt insbesondere mittig zwischen der ersten Kante und der zweiten Kante. Bevorzugt liegt die Schraubenmittelebene, im Querschnitt betrachtet, winkelhalbierend zu den jeweiligen Verbindungslinien der beiden Kanten mit der Schraubenmittelachse. Die beiden Kanten sind über eine Fläche miteinander verbunden.

Die Fläche weist in ihrem Querschnitt eine Konturlinie, bevorzugt eine geradlinige oder konvexe Kontur, auf. Über die Spitze liegen die Kanten in der Hüllkontur der Spitze. Der Abstand der Kante von der Schraubenmittelachse entspricht dem Radius der Spitze im entsprechenden Querschnitt, wobei die übrige Konturlinie einen geringeren Abstand zur Schraubenmittelachse aufweist.

Die Schraube besitzt in ihrem Tragbereich, in dem das Gewinde seinen Nenndurchmesser aufweist, einen Kerndurchmesser D_{K}, wobei der Kerndurchmesser als Durchmesser des Hüllzylinders des Schraubenkerns definiert ist. Bei einem zylindrischen Gewindegrund ist der Hüllzylinder identisch mit dem Schraubenkern.

Die Schraubenmittelebene zwischen den beiden Kanten schneidet die Fläche, wodurch sich in axialer Richtung eine Schnittkurve ergibt. Die Schraubenmittelebene schneidet die Konturlinie insbesondere mittig.

Erfindungsgemäß ist vorgesehen, dass der Abstand der Schnittkurve zur Schraubenmittelachse in Richtung des Schraubenkopfes, ausgehend von der Spitze, bis zum Erreichen des zylindrischen Teils des Schaftes wenigstens so lange größer wird, bis dieser dem halben Kerndurchmesser entspricht.

Erfindungsgemäß ist vorgesehen, dass entlang der Schnittkurve der axiale Abstand mit der Länge L von dem Schnittpunkt mit dem Abstand D_{K}/2 zur Schraubenmittelachse zum nächstliegenden Schnittpunkt mit dem Abstand D_{K}/4 größer als D_{K}/3 ist.

An der ersten Kante wird ein Kantenwinkel gebildet, der zwischen der Konturlinie und dem Schraubenmantel eingeschlossen ist.

Bei der erfindungsgemäßen Schraube nimmt der an der ersten Kante gebildete Kantenwinkel, der zwischen der Konturlinie und der Tangente an der Mantelfläche liegt, in Richtung des Schraubenkopfes auf sanfte Weise immer weiter zu. So führt der zunehmende Kantenwinkel zu einer zunehmenden Verdrängung des Materials, insbesondere des Holzes, nach außen. Diese Verdrängung führt einerseits zu einer erhöhten, in Umfangsrichtung lokalen, plastischen Verformung des umliegenden Mutter-Werkstoffs, und zu einer zunehmenden Verdrängung von durch die Spitze abgetrenntem Material nach außen. Auf diese Weise übt die Spitze nicht über die gesamte Länge ihrer Kanten eine Schneidfunktion aus. Je weiter der, der jeweiligen Querschnittsebene zugeordnete Schnittpunkt der Schnittkurve zu der Schraubenmittelachse beabstandet ist, umso größer werden die von der Kante erzeugten, entgegen der Schraubrichtung nach Außen gerichteten Kräfte. Dadurch kann eine ausreichend hohe Flächenpressung erzeugt werden, so dass der Mutter-Werkstoff so stark plastisch verformt wird, dass ein Kanal entsteht, der dem Kerndurchmesser der Schraube entspricht, wodurch die Rückstellkräfte des Mutter-Werkstoffs deutlich reduziert werden.

Durch den auf diese Weise erzeugten hohen lokalen Verdrängungsdruck, wird, nach der Erfindung, die Matrix des Mutter-Werkstoffs in diesem Bereich nicht über eine große Fläche elastisch komprimiert, sondern nur in einem kleinen Bereich und dadurch besser plastisch verformt. Die plastische Verformung des Randbereichs hat den Vorteil, dass auf diese Weise das für den Schraubenkörper notwendige Volumen in dem Werkstoff geschaffen werden kann und dennoch die Vorspannung in der Matrix des Werkstoffs aufgrund der Verringerung der Rückstellkräfte reduziert werden kann.

So wird durch die Spitze eine fortwährende Materialverdrängung im Sinne einer lokalen plastischen Verformung bei der Lochbildung erzielt, insbesondere im Sinne eines Einbrechens der Porenwände. Entsprechend wird die Spaltwirkung im Material reduziert, was auch mit einem geringen Eindrehmoment einhergeht, da durch die plastische Verformung die Rückstellkräfte des Werkstoffs minimal werden.

Gemäß einer weiteren vorteilhaften Ausführungsform nimmt der Abstand der Schnittpunkte entlang der Schnittkurve zur Schraubenmittelachse wenigstens ab der Hälfte der axialen Länge der Spitze in Richtung des Schraubenkopfes kontinuierlich zu. Durch die kontinuierliche Zunahme des Abstandes wird ein fließender Übergang von einem potenziell schneidenden Verhalten zu einem plastisch verformenden und spanverdrängenden Verhalten der Spitze erreicht. So ergibt sich in dieser Richtung eine sukzessiv zunehmende Verdrängungswirkung über die Spitze und gegebenenfalls dem an die Spitze anschließenden Tragbereich des Schafts. Insbesondere erstreckt sich die kontinuierliche Zunahme des Abstandes der Schnittpunkte der Schnittkurve mindestens über eine axiale Länge, die größer als der Kerndurchmesser D_{K} ist.

Die Funktion der kontinuierlichen Zunahme verläuft im Wesentlichen konkav. Dies kann durch Abschnitte linearer Bereiche unterschiedlicher Steigung und/oder durch hyperbolische und/oder elliptische Bereiche erfolgen.

Weist die Fläche eine geradlinige Konturlinie auf, ist die Spitze, und ggfs. der Tragbereich des Schafts, in der Normalen-Ebene zur Schraubenachse betrachtet, über ein Kreissegment ausgenommen. Das Kreissegment besitzt eine Höhe. Die Höhe kann höchstens dem Spitzenradius bzw. dem Tragbereichsradius in derselben Normalen-Ebene entsprechen. In Axialrichtung ausgehend von der vordersten Spitze betrachtet ergibt sich eine je nach Funktion der Abnahme des Spitzenradius ausgestaltete Krümmung der Schnittkurve.

Die geradlinige Ausbildung hat den Vorteil, dass das aus einem anfänglich gegebenenfalls schneidenden Verhalten anfallende Material des Mutter-Werkstoffes aus dem gesamten ausgesparten Volumen der Schraubenspitze von der zweiten Kante ab ungehindert über die Fläche entgegen der Schraubeneindrehrichtung zur ersten Kante hin verfrachtet werden kann, um von dort in den porösen Mutter-Werkstoff eingetragen zu werden, was zur Erhöhung des Kantendrucks beiträgt und die plastische Verformung der porösen Matrix unterstützt.

Alternativ kann die Fläche auch konvex ausgebildet sein, beispielsweise über zwei Flächen in der Querschnittsform eines Kreissektors, insbesondere mit einem stumpfen Außenwinkel. Der Schnittpunkt und oder die Flächen können dabei mehr oder weniger gerundet ausgeführt sein.

Insbesondere im Fall einer geradlinigen Konturlinie nimmt die Höhe des ausgeschnittenen Kreissegments entsprechend entlang der Schnittkurve, in Richtung des Kopfes, so lange ab, bis das ausgeschnittene Kreissegment im zylindrischen Teil des Schafts ausläuft und damit verschwindet. Analog dazu verringert sich auch eine kreissektorartig gestaltete Ausnehmung.

Weiter kann vorgesehen sein, dass die Schnittkurve in dem Bereich, in dem sie den halben Kerndurchmesser D_{K} von der Schraubenmittelachse beabstandet ist, eine solche Steigung aufweist, dass die Tangente an diesem Punkt einen Austrittswinkel von weniger als 45° mit der Schraubenmittelachse einschließt. Dadurch kann eine gute Abführung des abgetrennten Materials erfolgen.

Gemäß einer weiteren bevorzugten Ausgestaltung beginnt die Schnittkurve im vorderen Bereich der Spitze nahe an der Mittelachse. Insbesondere ist dort der Abstand kleiner als 25 %, insbesondere kleiner als 15 %, insbesondere kleiner oder gleich 10 %, insbesondere kleiner oder gleich 5 %, des Kerndurchmessers.

Die Gestaltung des Lochbildungsbereichs und der Spitze ist bevorzugt so gewählt, dass wenigstens in dem Bereich der Schnittkurve, in dem sie einen Abstand von 0,4 x D_{K} bis 0,5 x D_{K} zur Schraubenmittelachse aufweist, die Schnittkurve im Tragbereich liegt und dort eine Verdrängungswirkung des abgetragenen Materials sowohl in Verdrängungsrichtung nach außen als auch in Längsrichtung in Richtung des Kopfes auftritt. Durch die sich so ergebende resultierende Verdrängungsrichtung kann das im vorderen Bereich der Spitze abgetrennte Material verbessert aus dem Bereich der Spitze abgeführt werden.

Gemäß einer weiteren bevorzugten Ausgestaltung nimmt die Schnittkurve im Bereich der kontinuierlichen Zunahme entlang eines Radius zu. Entspricht die Schnittkurve einem Radius, kann die Ausnehmung der Schraubenspitze auf einfache Weise mittels eines Scheibenfräsers hergestellt werden.

Insbesondere verläuft die Schnittkurve derart, dass sie den Abstand D_{K}/2 von der Mittelachse in einem Punkt erreicht, der in dem der Spitze in Richtung des Kopfs nachfolgendenden Tragbereich des Schaftes, insbesondere zylindrischen Teil, liegt. Dort besitzt der Schraubenkern seinen vollen Kerndurchmesser D_{K}, wodurch die Kante in diesem Bereich wirken kann, um das Schraubenloch auszuformen.

In einer Weiterbildung der Erfindung besitzt das Gewinde eine Steigung, wobei der Abstand zwischen dem Punkt, an dem die Schnittkurve den Abstand D_{K}/2 von der Mittelachse erreicht, und dem Übergang der Gewindespitze zum Tragbereich, wenigstens dieser Steigung entspricht. Dadurch kann die Verdrängung des Materials auf den Kerndurchmesser über eine ganze Umdrehung erfolgen.

Gemäß einer weiteren bevorzugten Weiterbildung kann der Abstand zwischen dem Punkt, an dem die Schnittkurve im Tragbereich den Abstand D_{K}/2 von der Mittelachse erreicht, und dem Übergang der Gewindespitze zum Tragbereich bis zum 10-fachen insbesondere, weiter bevorzugt bis zum 8-fachen, weiter bevorzugt bis zum 6-fachen, weiter bevorzugt bis zum 2,5-fachen der Gewindesteigung oder bis etwa dem 1-fachen, der Gewindesteigung erreichen. Das Verhältnis dieses Abstands zur Gewindesteigung wird als Aktionsverhältnis bezeichnet. Insbesondere bei einem Aktionsverhältnis von mehr als der 2,5, also bei einem Abstand von mehr als der 2,5 -fachen Steigung im Tragbereich, im bevorzugt zylindrischen Teil der Schraube, ergibt sich, dass abgetrenntes, an der Spitze angesammeltes Material effizient in den Mutterwerkstoff verdrängt werden kann, sodass die Spaltwirkung weiter reduziert wird. Dadurch kann eine Verschraubung mit geringerem Abstand zum Rand eines Holzbauteils hin erreicht werden, ohne dass dieses spleißt.

Durch eine geringere Gewindesteigung wird die Einwirkung eines axialen Kantenabschnitts pro axialem Längenabschnitt des Mutterwerkstoffs erhöht, insbesondere bei einem hohen Aktionsverhältnis, da der Kantenabschnitt pro Längenabschnitt öfter auf den Mutterwerkstoff einwirkt, da aufgrund der geringeren Gewindesteigung der Vorschub der Schraube pro Umdrehung geringer ist. Durch die Erhöhung der Anzahl der Umdrehungen pro Vorschub wird eine verbesserte Verdrängung / Längenabschnitt erreicht, wodurch die Spaltwirkung weiter reduziert werden kann.

Die Anzahl solcher Kantenaktionen pro Längenabschnitt kann entsprechend durch das Aktionsverhältnis bestimmt werden. So kann auch dem Schraubennenndurchmesser durch die Einstellung dieses Aktionsverhältnisses Rechnung getragen werden. So kann mit zunehmenden Nenndurchmesser das Aktionsverhältnis vergrößert werden.

Bevorzugt beträgt das Aktionsverhältnis mehr als 2,5 und weniger als 8. Insbesondere der Bereich des Aktionsverhältnisses zwischen 3 und 6 hat sich als besonders wirksam erwiesen. Dieses Aktionsverhältnis trägt den Anforderungen an eine möglichst geringe Gesamtgewindelänge und an eine möglichst spleißfreie Verschraubung Rechnung.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

### In der Zeichnung bedeutet:

- Fig. 1: eine ausschnittsweise perspektivische Ansicht einer erfindungsgemäßen Schraube;
- Fig. 2: eine Schnittansicht A-A der Fig. 1;
- Fig. 3: eine Schnittansicht B-B der Fig. 1;
- Fig. 4a: eine vergrößerte Darstellung der Spitze aus Fig. 1;
- Fig. 4b: eine schematische Ansicht eines Schnitts an der in der Fig. 4a angegebenen Position 4b;
- Fig. 4c: eine schematische Ansicht eines Schnitts an der in der Fig. 4a angegebenen Position 4c;
- Fig. 4d: eine schematische Ansicht eines Schnitts an der in der Fig. 4a angegebenen Position 4d;
- Fig. 5a: eine Schraube mit einem Verlauf der Schnittkurve ähnlich Fig. 1 in perspektivischer Ansicht;
- Fig. 5b: eine Schnittansicht C-C einer Schraube gemäß Fig. 5a mit Darstellung der Schnittkurve;
- Fig. 5c: eine Querschnittansicht B-B der Fig. 5a;
- Fig. 6: eine Seitenansicht einer weiteren erfindungsgemäßen Ausgestaltung mit Darstellung der Schnittkurve;
- Fig. 7: eine Seitenansicht einer weiteren erfindungsgemäßen Ausgestaltung mit Darstellung der Schnittkurve;
- Fig. 8: eine Seitenansicht einer weiteren erfindungsgemäßen Ausgestaltung mit Darstellung der Schnittkurve;
- Fig. 9: eine Seitenansicht einer weiteren erfindungsgemäßen Ausführung, und
- Fig. 10: eine Seitenansicht einer weiteren erfindungsgemäßen Ausführung.

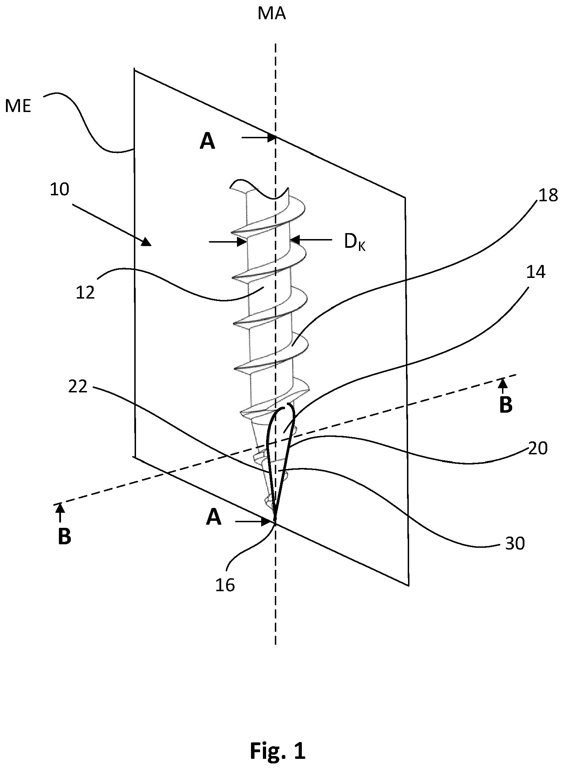

Fig. 1 zeigt eine perspektivische Ansicht, in der eine erfindungsgemäße Schraube 10 ausschnittsweise dargestellt ist. Die Schraube 10 umfasst einen Schaft 12, der von einem zylindrischen Bereich in eine Spitze 14 übergeht, die in einer vorderen Spitze 16 endet. Der Schaft 12 trägt ein Gewinde 18, das sich bis in die Spitze 14 erstreckt. Der Schaft 12 besitzt einen Kerndurchmesser D_{K}.

Die Spitze 14 weist einen Lochbildungsbereich auf, der so ausgebildet ist, dass an der Schraubenspitze 14 in Drehrichtung eine erste Kante 20 und entgegen der Drehrichtung eine zweite Kante 22 im Übergang von der Mantelfläche zur Ausnehmung gebildet ist. So könnten während der Drehung der Schraube an der ersten Kante 20 wenigstens in ihrem der Spitze näherliegenden Bereich noch Holzfasern von dem Mutter-Werkstoff abgetrennt werden.

In Fig. 1 ist weiter die Mittelebene ME dargestellt, die die Mittelachse MA beinhaltet und die mittig zwischen den zwei Kanten 20, 22 der Schraubenspitze 14 liegt. Die Kanten 20, 22 sind zur besseren Erkennbarkeit fett dargestellt.

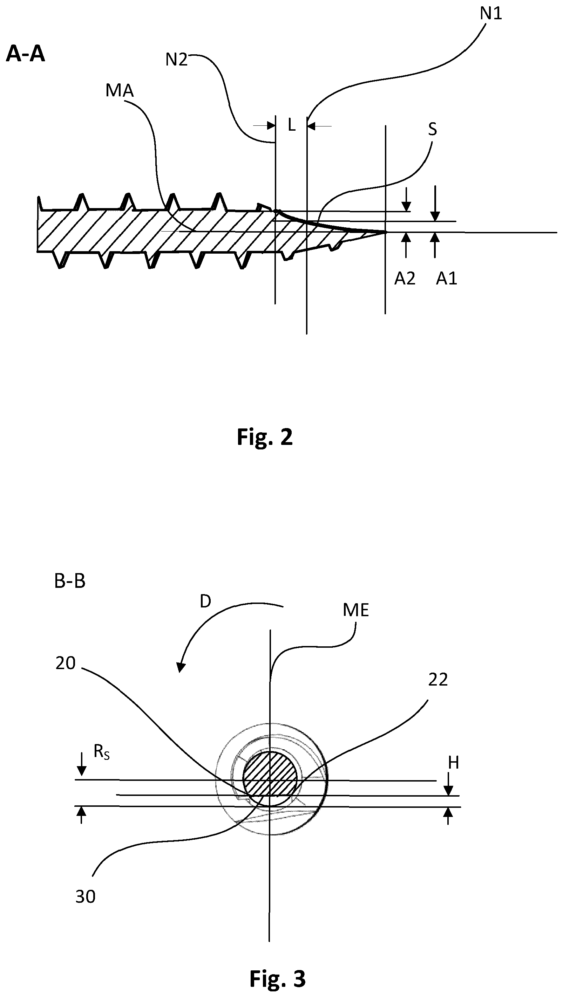

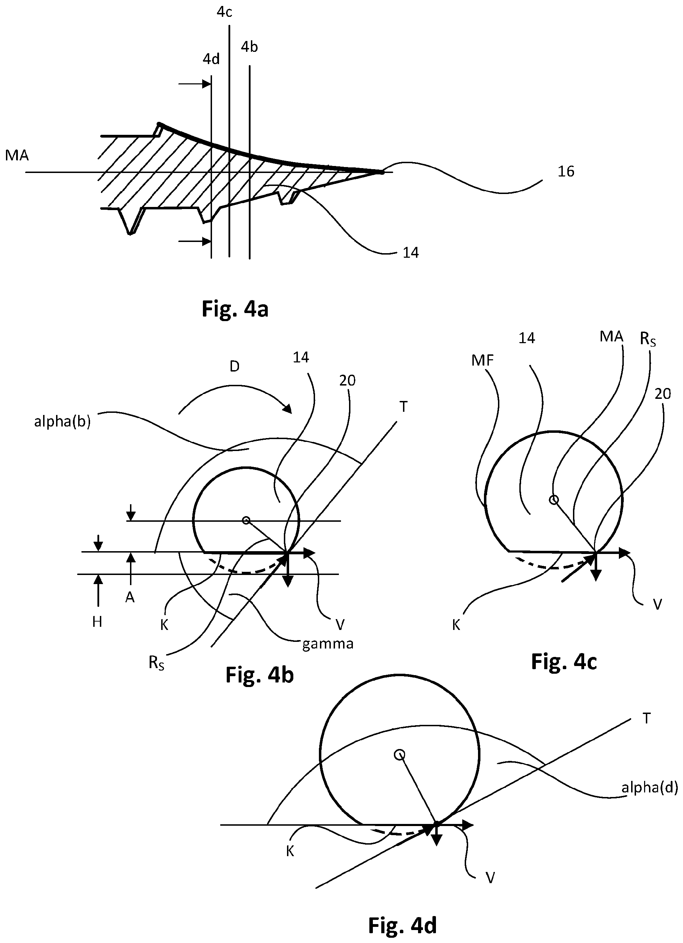

Zwischen den beiden Kanten 20, 22 erstreckt sich eine Fläche 30, die von der Mittelebene ME geschnitten wird und so eine Schnittkurve, wie in Fig. 2 dargestellt, bildet. Die Fläche 30 weist in der vorliegenden Ausgestaltung eine gerade Kontur auf, wie dies in den Figuren 4b bis 4d gezeigt ist.

Fig. 2 zeigt eine Schnittansicht der Schraube gemäß Fig. 1 an der Mittelebene ME sowie die sich in der vorliegenden Ausführungsform ergebende Schnittkurve S. Der Abstand A der Schnittpunkte der Schnittkurve S von der Mittelachse MA vergrößert sich ausgehend von der vordersten Spitze 16 bis zum zylindrischen tragenden Teil des Schafts 12 wenigstens so lange, bis der Abstand A der Schnittkurve S dem halben Kerndurchmesser D_{K} des zylindrischen Teils des Schafts 12 entspricht, der in der Figur mit dem Abstand A2 angegeben ist und in axialer Richtung den Schnittpunkt N2 mit der Normalen-Ebene bildet.

Wie dargestellt, durchbrechen bei N2, A2 die Kanten 20, 22 die zylindrische Hüllkurve des, insbesondere zylindrischen, Tragbereichs des Schafts, wobei dies im Wesentlichen das Ende des Lochbildungsbereichs darstellt. Die Länge L zwischen den entsprechenden Schnittpunkten mit der Normalen-Ebene, nämlich N1, bei dem der Abstand der Schnittkurve D_{K}/4 beträgt und N2, bei dem der Abstand D_{K}/2 beträgt, ist größer als 1/3 D_{K}, wobei D_{K} der Kerndurchmesser im Tragbereich ist.

Der dadurch erzeugte, erfindungsgemäß sanfte Auslauf des Lochbildungsbereichs führt zu einer zunehmenden Verdrängung des Materials der Holzmatrix, so dass sich eine plastische Verformung der Holzmatrix im Lochbildungsbereich ergibt. Dadurch kann die Spaltwirkung beim Eindrehen der Schraube reduziert werden.

In der vorliegenden Ausgestaltung ergibt sich damit für den Lochbildungsbereich der Spitze ein sanfter Übergang von der Ausnehmung der Spitze zum tragenden Teil des Schafts.

Fig. 3 zeigt einen Schnitt in der Normalen-Ebene zur Schraubenachse B-B durch die Spitze 14. Fläche 30 erstreckt sich von der in Drehrichtung D liegenden ersten Kante 20 über die Schraubenmittelebene ME bis zu der entgegen der Drehrichtung D liegenden Kante 22. Die Fläche 30 verbindet die Kanten im Querschnitt geradlinig orthogonal zur Mittelebene ME.

Fig. 4a zeigt eine vergrößerte Detailansicht der Schnittansicht aus Fig. 2, in der die Lage der schematischen Schnitte in der Normalen-Ebene 4b bis 4d eingetragen sind.

Die Figuren 4b bis 4d zeigen den schematischen Querschnittsverlauf der Spitze 14, ohne Gewinde, in Richtung des Kopfes (nicht dargestellt) der Schraube. Der Abstand A der Schnittkurve S zur Schraubenmittelachse MA nimmt über den axialen Abstand zur vordersten Spitze 16 zu. Auch der Spitzenradius Rs nimmt über den axialen Abstand zur vordersten Spitze zu. Der Spitzenradius Rs ist der Radius in der jeweiligen Querschnittsebene, den die Spitze 14 in ihrem nicht ausgenommenen Kreisbogensegment mit einer geradlinigen Konturlinie K aufweist.

Das Verhältnis der Höhe H des ausgeschnittenen Segments (durch Strichlinie gekennzeichnet) zum Spitzenradius Rs in der Normalen-Ebene nimmt mit zunehmendem axialem Abstand zur vordersten Spitze 16 so lange ab, bis die Höhe H des ausgeschnittenen Kreissegments Null ist und der Radius dem halben Kerndurchmesser D_{K} des Schafts im Tragbereich entspricht. Der Schnittkurvenkontur in Richtung des Kopfes folgend, kann die Ausnehmung auch außerhalb des Schraubenkerns fortgesetzt sein, so dass auch das Gewinde entsprechend ausgenommen sein kann.

Durch die Vergrößerung des Abstands von der Schraubenmittelachse und der gleichzeitigen Verkleinerung des Verhältnisses der Höhe H des ausgeschnittenen Kreissegments zum Spitzenradius Rs ergibt sich eine sukzessive Verkleinerung des Schneidwinkels gamma, also des Winkels zwischen der Fläche und der Tangente an der Kante 20. Dadurch ergibt sich insgesamt eine zunehmend verdrängende Wirkung der in Drehrichtung liegenden Kante 20. Dadurch wird eine zunehmend größere Flächenpressung an der Kante 20 in der Richtung der nach außen gerichteten Kraftkomponente V, die einen stumpfen Winkel, nämlich den Scheitelwinkel zum Kantenwinkel, mit der Tangente T an den Kreisumfang der Mantelfläche MF einschließt, erzeugt. So ergibt sich in Richtung des Kopfes eine zunehmend verdrängende Wirkung, die zu einer kontinuierlichen plastischen Verformung des Mutter-Werkstoffs und zu einem Verdrängen des gegebenenfalls durch das schneidende Verhalten des vorderen Bereichs der Spitze anfallenden Materials in die Matrix des Mutter-Werkstoffs führt.

Auf diese Weise kann auch Material, das von der Kante 20 bis zur Lage des Schnitts 4b von der Spitze 14 abgetrennt wurde, mit dem zunehmenden Abstand zur vordersten Spitze 16 aus dem Lochbildungsbereich heraus in die Holzmatrix hineingedrückt werden. Figur 4b zeigt exemplarisch den Kantenwinkel alpha(b), den die Tangente an den Schraubenkern in seinem nicht ausgenommenen Bereich mit der Konturlinie bildet.

Der dargestellte Kantenwinkel alpha nimmt von alpha(b) in Fig. 4b bis alpha(d) in Fig. 4d zu. Durch die Zunahme des Kantenwinkels alpha, einhergehend mit der Verkleinerung des Schneidwinkels gamma, erfolgt durch die Vergrößerung der nach außen gerichteten Kraftkomponente V eine zunehmende verdrängende Wirkung.

Die Schnitte in den Figuren 4b bis 4d zeigen exemplarisch, wie sich die nach außen gerichtete Verdrängungskraftkomponente V mit zunehmendem Abstand zur vordersten Spitze vergrößert.

Es ist damit eine Schraubenspitze geschaffen, deren Spaltwirkung reduziert wird, da die Matrix des Mutter-Werkstoffs gegenüber den bekannten Spitzen sehr viel stärker plastisch verformt wird. Auch in dem Fall, dass im vorderen Bereich der Spitze vorgebohrt wird, wird das abgeschnittene Material durch die zunehmende nach außen wirkende Verformungskraft auch gleich verdrängt.

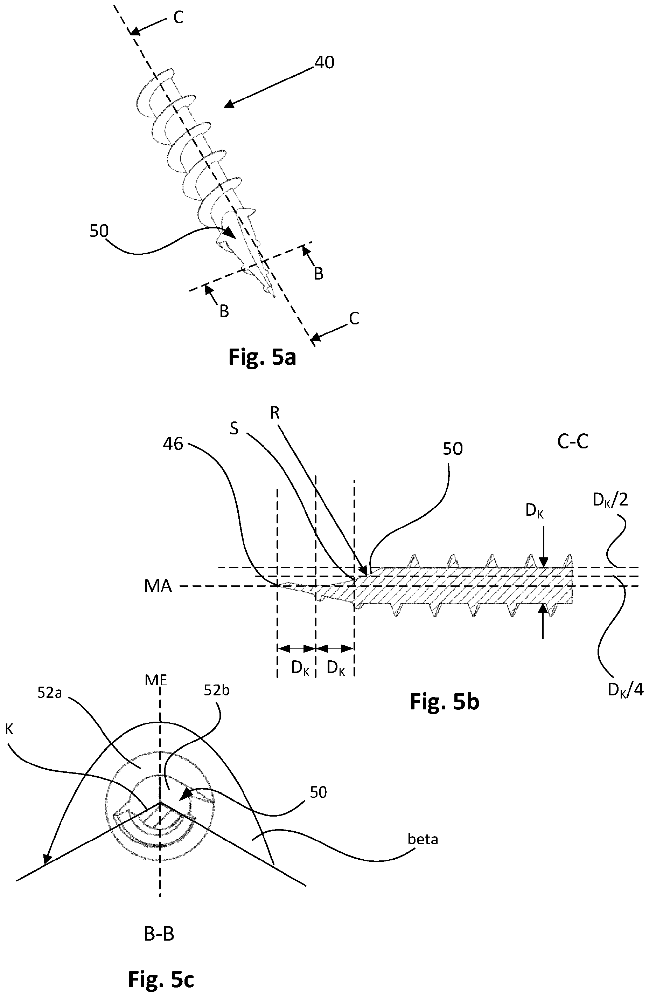

Fig. 5a bis Fig. 5c zeigen Darstellungen einer erfindungsgemäßen Schraube 40, deren Kanten über eine konvexe Fläche 50 in der Art einer sektorartigen Konturlinie K miteinander verbunden sind und der Schnittwinkel der beiden Flächenbereiche 52a, 52b mehr als 180° aufweist, nämlich im vorliegenden Fall 225°. Fig. 5a zeigt dabei die perspektivische Ansicht.

Fig. 5b zeigt die Schnittansicht C-C der Schraube gemäß Fig. 5a an der Mittelebene ME, die winkelhalbierend zu den Flächenbereichen 52a, 52b liegt. In dieser Darstellung ist zu erkennen, dass die Schnittkurve S ausgehend von der vordersten Spitze 46 in ihrem Abstand zur Mittelachse MA erst abnehmen und dann im weiteren Verlauf wieder zunehmen kann. Ab etwa dem Abstand D_{K} von der vordersten Spitze verläuft die Schnittkurve S dann entlang eines Radius R. Die Länge L, in der der Abstand der Schnittkurve S von D_{K}/4 nach D_{K}/2 zunimmt, ist etwas größer als D_{K}/3.

Fig. 5c zeigt einen Querschnitt B-B der Fig. 5b, wobei der Winkel beta zwischen den Flächenbereichen 52a, 52b von 225° gut zu erkennen ist. Durch diese Gestaltung wird eine größere Verdrängungswirkung relativ zur Schneidwirkung der Kante erzielt.

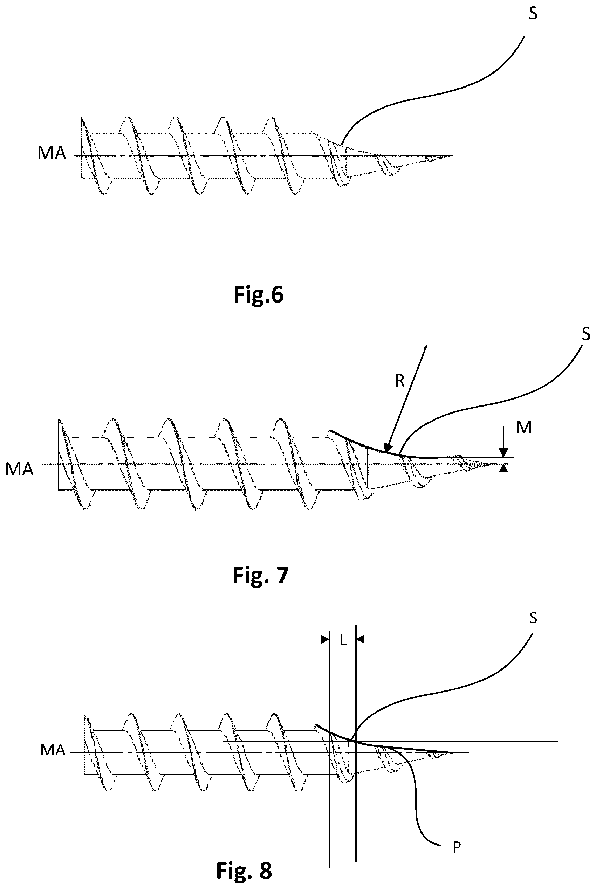

Fig. 6 bis Fig. 8 zeigen weitere Ausgestaltungen mit unterschiedlichen Verläufen der Schnittkurve S, wobei die Querschnittsform der Spitzen, im Wesentlichen, den in den Fig. 4b bis 4d beschriebenen Kreissegmenten entspricht.

Fig. 6 zeigt eine Ausgestaltung, gemäß der, bis etwa zur Hälfte der axialen Ausdehnung der Spitze keine Zunahme des Abstands der Schnittkurve S zur Mittelachse MA erfolgt. Vielmehr liegen die Flächen in diesem Bereich auf der Höhe der Mittelachse. Ab etwa der Hälfte der axialen Ausdehnung der Spitze, ausgehend von der vordersten Spitze, beginnt dann die Zunahme des Abstands der Schnittkurve S zur Mittelachse MA über etwa 1,5 x D_{K}, bis dann der Abstand dem halben Kerndurchmesser D_{K} entspricht.

Fig. 7 zeigt eine Schnittkurve S, die entlang eines Kreisradius verläuft. Die Stelle mit dem geringsten Abstand M ist dabei etwa D_{K}/8 von der Mittelachse beabstandet.

Fig. 8 zeigt eine weitere erfindungsgemäße Ausgestaltung mit der entsprechenden Schnittkurve S.

Diese verläuft in der vorliegenden Ausgestaltung ausgehend von der vordersten Spitze bis etwa zur halben Spitzenlänge mit einer linearen Zunahme des Abstands A und im weiteren Verlauf konkav gekrümmt, bevorzugt entlang eines Radius. Der axiale Abstand zwischen dem nächstliegenden Schnittpunkt der Schnittkurve S mit der Normalen-Ebene, bei welchen der Abstand von der Mittelachse MA gleich D_{K}/2 und D_{K}/4 ist, stellt die Länge L dar, die größer als D_{K}/2 ist. Je größer die Länge L ist, desto sanfter kann der Auslauf im Tragbereich des Schraubenschaftes gestaltet sein. Jedoch wird dabei die Tragfähigkeit bei gleicher Gewindelänge reduziert.

Durch den vorderen Bereich kann die Schraubenspitze an unterschiedliche Anwendungsfälle angepasst werden, wobei der Übergang zum tragenden Teil des Schafts sanft ausläuft, was wiederum eine Verdrängung des Materials, das im vorderen Bereich der Spitze abgetrennt wurde, zur Folge hat.

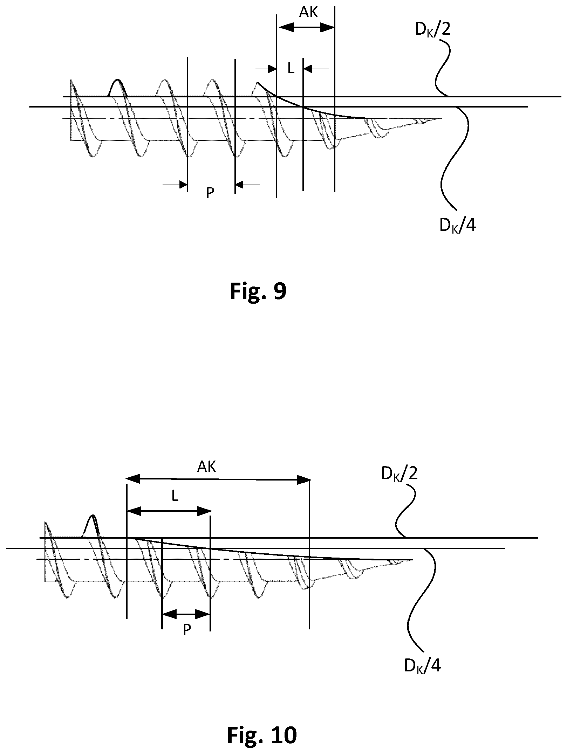

Fig. 9 zeigt eine Ausführungsform, bei der die Ausnehmung eine im wesentlichen geradlinige Konturlinie aufweist und sich die Ausnehmung etwas mehr als die Steigung P in den zylindrischen Teil des Schafts hinein erstreckt. Dies führt dazu, dass der Bereich der Kante, der auf dem Kerndurchmesser D_{K} liegt, den Abstand D_{K}/2 von der Schraubenmittelachse aufweist, und wenigstens über den Vorschub einer vollständigen Umdrehung der Schraube auf den Mutter-Werkstoff einwirkt, wodurch die Lochbildungswirkung verbessert wird. Die Länge L nimmt innerhalb des Abstands der Schnittkurve von D_{K}/4 zu D_{K}/2 zu und liegt in der vorliegenden Ausführung vollständig im Tragbereich des Schafts. Dies bedeutet, dass der Abstand AK von dem Übergang der Schraubenspitze zum Tragbereich zum Austrittspunkt, an dem die Ausnehmung ausläuft, also der Punkt an dem der Abstand zur Mittelachse D_{K}/2 beträgt, größer als die Länge L ist. Das Aktionsverhältnis AK / P liegt hier bei weniger als 2,5. Dadurch kann bei gleicher Gesamtgewindelänge ein längerer Bereich an vollständig tragendem Gewinde im Tragbereich erreicht werden.

Fig. 10 zeigt eine weitere Ausgestaltung, bei der der Punkt, auch Austrittpunkt, bei dem die Schnittkurve den Abstand DK/2 von der Mittelachse erreicht, im zylindrischen Tragbereich des Schaftes liegt. Der Abstand AK beträgt im vorliegenden Beispiel in etwa das 4-fache der Gewindesteigung P. Das Aktionsverhältnis AK / P liegt demnach bei etwa 4. Mit einer solchen Ausgestaltung kann eine weitere Reduzierung der Spaltwirkung, bei gleichem Mutterwerkstoff, erfolgen, da zum einen durch das erhöhte Aktionsverhältnis, eine verstärkte Verdichtung des Muttermaterials erfolgen kann, zum anderen durch die längere Ausnehmung ausgeschnittenes Material verbessert aus dem geformten Kanal ausgetragen werden kann. Dadurch kann eine Verschraubung in randnahen Bereichen spleißfrei erfolgen.
Insbesondere liegt auch in diesem Ausführungsbeispiel der Punkt, an dem die Schnittkurve DK/4 erreicht, im Tragebereich der Schraube, wonach auch in dieser Ausführung AK deutlich größer als L ist.

## Patentansprüche

1. Schraube (10) mit einem Schaft (12), der einen Kerndurchmesser besitzt und der in eine Spitze (14) übergeht, wobei die Spitze (14) sich ausgehend vom Tragbereich des Schafts (12) verjüngt und die Spitze (14) in einer vordersten Spitze (16) endet, wobei die vorderste Spitze (16) auf der Schraubenmittelachse (MA) liegt, wobei die Schraube (10) ein Gewinde (18) zur Verschraubung der Schraube mit einem Bauteil in einer Einschraubdrehrichtung besitzt und das Gewinde (18) sich bis in die Spitze (14) erstreckt, wobei ferner eine Schraubenmittelebene (ME) definiert ist und an der Spitze (14) wenigstens zwei Kanten (20, 22) durch eine Ausnehmung wenigstens der Spitze gebildet sind, wobei eine erste Kante (20) in der Einschraubdrehrichtung und eine zweite Kante (22) entgegen der Einschraubdrehrichtung liegt, wobei die erste Kante und die zweite Kante beidseitig der Schraubenmittelebene (ME) liegen, wobei die beiden Kanten (20, 22) über eine Fläche (30, 50) verbunden sind, wobei die Fläche (30, 50) in ihren Querschnitten eine Konturlinie (K) besitzt, wobei sich eine Schnittkurve (S) der Schraubenmittelebene (ME), die zwischen den Kanten (20, 22) liegt, mit der Fläche (30, 50) ergibt, wobei der Abstand (A) der Schnittkurve (S) von der Schraubenmittelachse (MA) , von der vordersten Spitze (16) ausgehend gesehen, wenigstens so lange größer wird, bis dieser dem halben Kerndurchmesser D_{K} entspricht, wobei derjenige Schnittpunkt (A1) der Schnittkurve (S), der D_{K}/4 von der Schraubenmittelachse entfernt ist, eine Länge (L) in Längsrichtung der Schraube von dem nächstliegenden Schnittpunkt (A2) mit dem Abstand D_{K}/2 von der Schraubenmittelachse, entfernt ist, wobei die Länge (L) größer als D_{K}/3 ist, wobei über die Länge (L) in diesem Bereich ein Kantenwinkel (alpha), den die Tangente (T) an den Schraubenmantel an der ersten Kante (20) mit der Konturlinie (K) einschließt, mit zunehmendem Abstand der Schnittkurve (S) von der Mittelachse (MA) ebenfalls zunimmt.

2. Schraube nach Anspruch 1, **dadurch gekennzeichnet, dass** die Länge (L) größer als D_{K}/2 ist.

3. Schraube nach einem der vorangehenden Ansprüche, **dadurch gekennzeichnet, dass** die Konturlinie (K) im Wesentlichen geradlinig oder konvex verläuft.

4. Schraube nach einem der vorangehenden Ansprüche, **dadurch gekennzeichnet, dass** die Spitze eine, insbesondere kegelförmige, Grundform aufweist, so dass im Querschnitt die Kanten auf der der Konturlinie gegenüberliegenden Seite kreisförmig verbunden sind.

5. Schraube nach einem der vorangehenden Ansprüche, **dadurch gekennzeichnet, dass** die Zunahme des Abstands (A) der Schnittkurve (S) wenigstens ab der Hälfte der Schraubenspitze in Richtung des Kopfes kontinuierlich erfolgt.

6. Schraube nach einem der vorangehenden Ansprüche, **dadurch gekennzeichnet, dass** die kontinuierliche Zunahme des Abstands (A) der Schnittkurve (S) sich mindestens über eine axiale Länge von einmal Kerndurchmesser D_{K} erstreckt.

7. Schraube nach einem der vorangehenden Ansprüche, **dadurch gekennzeichnet, dass** ausgehend von der vordersten Spitze (16) der Abstand der Kanten (20, 22) zur Mittelebene in Richtung des Kopfes zunimmt.

8. Schraube nach einem der vorangehenden Ansprüche, **dadurch gekennzeichnet, dass** die Schnittkurve im Bereich des Abstands (A2) von D_{K}/2 einen solchen Anstieg aufweist, dass die Tangente einen Austrittswinkel mit der Schraubenmittelachse (MA) einschließt, der weniger als 45° beträgt.

9. Schraube nach einem der vorangehenden Ansprüche, **dadurch gekennzeichnet, dass** der Abstand (A) der Schnittkurve (S) zur Mittelachse an dem der vordersten Spitze (16) zugewandten Ende kleiner oder gleich 25 %, insbesondere kleiner oder gleich 15 %, insbesondere kleiner oder gleich 10 %, insbesondere kleiner oder gleich 5 %, des Kerndurchmessers D_{K} ist.

10. Schraube nach einem der vorangehenden Ansprüche, **dadurch gekennzeichnet, dass** im Abstandsbereich (A) der Schnittkurve (S) von 0,4 D_{K} bis 0,5 D_{K}, die Schnittkurve (S) im Tragbereich liegt und dort eine Verdrängungswirkung des abgetragenen Materials sowohl in Verdrängungsrichtung (V) nach außen als auch in Längsrichtung in Richtung des Kopfes auftritt.

11. Schraube nach einem der Ansprüche 2 bis 10, **dadurch gekennzeichnet, dass** der Bereich kontinuierlicher Zunahme des Abstands (A) der Schnittkurve (S) einem Kreisradius folgt.

12. Schraube nach einem der vorangehenden Ansprüche, **dadurch gekennzeichnet, dass** in Fortsetzung der Schnittkurve (S) über den radialen Abstand D_{K}/2 hinaus auch das Gewinde im Tragbereich des Schafts (12) entsprechend ausgenommen ist.

13. Schraube nach einem der vorangehenden Ansprüche, **dadurch gekennzeichnet, dass** die Schnittkurve (S) den Abstand D_{K}/2 von der Mittelachse an einem Punkt erreicht, der im zylindrischen Teil des Schaftes liegt.

14. Schraube nach einem der vorangehenden Ansprüche, **dadurch gekennzeichnet, dass** das Gewinde eine Steigung (P) besitzt und der Abstand (AK) vom Übergang der Schraubenspitze zum Tragbereich zu dem Punkt, an dem die Schnittkurve (S) den Abstand D_{K}/2 von der Mittelachse (MA) erreicht, bis zur 10-fachen, insbesondere bis zur 8-fachen der Steigung (P), insbesondere bis zur 6-fachen, insbesondere bis zur 2,5-fachen, insbesondere in etwa der 1-fachen, der Gewindesteigung beträgt.

15. Schraube nach Anspruch 14, **dadurch gekennzeichnet, dass** sich ein Aktionsverhältnis von Abstand (AK) zur Gewindesteigung (P) zwischen 3 und 6 ergibt, wobei sich der Abstand (AK) zwischen dem Übergang der Schraubenspitze zum Tragbereich und dem Punkt, an dem die Schnittkurve (S) den Abstand D_{K}/2 von der Mittelachse (MA) erreicht, ergibt.

## Claims

1. Screw (10) comprising a shaft (12) which has a core diameter and which transitions into a tip (14), which tip (14) tapers starting from the load bearing area of the shaft (12) and which tip (14) terminates in a foremost tip (16), said foremost tip (16) lying on the screw center axis (MA), which screw (10) has a thread (18) for screwing the screw to a component in a screw-in direction of rotation and the thread (18) extends up to the tip (14), wherein furthermore a screw center plane (ME) is defined and at least two edges (20, 22) are formed at the tip (14) by a recess at least of the tip, wherein a first edge (20) lies in the screw-in direction of rotation and a second edge (22) lies counter to the screw-in direction of rotation, wherein the first edge and the second edge lie on both sides of the screw center plane (ME), wherein the two edges (20, 22) are connected via a surface (30, 50), wherein the surface (30, 50) has a contour line (K) in its cross-sections, which results in the creation of an intersection curve (S) of the screw center plane (ME), which lies between the edges (20, 22), with the surface (30, 50), with the distance (A) of the intersection curve (S) from the screw center axis (MA), as viewed from the foremost tip (16), increasing at least until this distance corresponds to half the core diameter D_{K}, with the intersection point (A1) of the intersection curve (S), which is D_{K}/4 away from the screw center axis, being spaced by a length (L) in the longitudinal direction of the screw from the nearest intersection point (A2) located at the distance D_{K}/2 from the screw center axis, which length (L) is greater than D_{K}/3, wherein, over the length (L) in this region an edge angle (alpha), which is defined between the tangent (T) to the screw shell surface on the first edge (20) and the contour line (K), also increases with increasing distance of the intersection curve (S) from the center axis (MA).

2. Screw according to claim 1, **characterized in that** the length (L) is greater than D_{K}/2.

3. Screw according to any one of the preceding claims, **characterized in that** the contour line (K) is essentially rectilinear or convex.

4. Screw according to any one of the preceding claims, **characterized in that** the tip has a basic shape, in particular a conical basic shape, so that, viewed in cross-section, the edges on the side opposite the contour line are connected in a circle.

5. Screw according to any one of the preceding claims, **characterized in that** the distance (A) of the intersection curve (S) increases continuously, starting at least halfway from the tip of the screw toward the head.

6. Screw according to any one of the preceding claims, **characterized in that** the continuous increase in the distance (A) of the intersection curve (S) extends over at least an axial length of one core diameter D_{K}.

7. Screw according to any one of the preceding claims, **characterized in that,** starting from the foremost tip (16), the distance of the edges (20, 22) from the center plane increases towards the head.

8. Screw according to any one of the preceding claims, **characterized in that** the intersection curve has such a slope in the region of the distance (A2) of D_{K}/2 that the tangent forms an exit angle of less than 45° with the screw center line (MA).

9. Screw according to any one of the preceding claims, **characterized in that** the distance (A) of the intersection curve (S) from the center axis at the end facing the foremost tip (16) is less than or equal to 25%, in particular less than or equal to 15%, in particular less than or equal to 10%, in particular less than or equal to 5 %, of the core diameter D_{K}.

10. Screw according to any one of the preceding claims, **characterized in that** in the distance range (A) of the intersection curve (S) of between 0.4 D_{K} and 0.5 D_{K}, the intersection curve (S) is in the load bearing region which results in the effect of the removed material being displaced both in the outward displacement direction (V) and in the longitudinal direction toward the head.

11. Screw according to any one of claims 2 to 10 above, **characterized in that** the area of continuous increase of the distance (A) of the intersection curve (S) follows a circular radius.

12. Screw according to any one of the preceding claims, **characterized in that,** in continuation of the intersection curve (S) beyond the radial distance D_{K}/2, the thread in the load bearing region of the shaft (12) is also correspondingly recessed.

13. Screw according to any one of the preceding claims, **characterized in that** the intersection curve (S) reaches the distance D_{K}/2 from the center axis at a point which is located in the cylindrical portion of the shaft.

14. Screw according to any one of the preceding claims, **characterized in that** the thread has a pitch (P), and the distance (AK) from the transition of the screw tip into the load bearing region to the point at which the intersection curve (S) reaches the distance D_{K}/2 from the center axis (MA) is up to 10 times, in particular up to 8 times, the pitch (P), in particular up to 6 times, in particular up to 2.5 times, in particular approximately 1 times, the thread pitch.

15. Screw according to claim 14, **characterized in that** the resulting action ratio of distance (AK) to thread pitch (P) is between 3 and 6, with the distance (AK) being between the transition of the screw tip into the load bearing area and the point at which the intersection curve (S) reaches the distance D_{K}/2 from the center axis (MA).

## Revendications

1. Vis (10) dotée d'une tige (12), qui possède un diamètre central et qui se transforme en une pointe (14), dans laquelle la pointe (14) s'amincit en partant de la zone de support de la tige (12) et la pointe (14) se termine en une pointe avancée (16), dans laquelle la pointe avancée (16) se trouve sur l'axe médian de vis (MA), où la vis (10) possède un filetage (18) pour le vissage de la vis avec un composant dans une direction de rotation de vissage et le filetage (18) s'étend jusque dans la pointe (14), où un plan médian de vis (ME) est en outre défini et au moins deux arêtes (20, 22) sont formées au niveau de la pointe (14) par un évidement d'au moins la pointe, où une première arête (20) se trouve dans la direction de rotation de vissage et une deuxième arête (22) se trouve à l'opposé de la direction de rotation de vissage, où la première arête et la deuxième arête se trouvent des deux côtés du plan médian de vis (ME), où les deux arêtes (20, 22) sont reliées par le biais d'une surface (30, 50), où la surface (30, 50) possède une ligne de contour (K) dans ses sections transversales, où il apparaît une courbe d'intersection (S) du plan médian de vis (ME) qui se situe entre les arêtes (20, 22) avec la surface (30, 50), où la distance (A) de la courbe d'intersection (S) par rapport au plan médian de vis (MA), vue depuis la pointe avancée (16), devient plus importante du moins tant que celle-ci correspond à la moitié du diamètre central D_{K}, où ledit point d'intersection (A1) de la courbe d'intersection (S), qui est distant de D_{K}/4 par rapport à l'axe médian de vis, est distant d'une longueur (L) dans le sens longitudinal de la vis par rapport au prochain point d'intersection (A2) avec la distance D_{K}/2 par rapport à l'axe médian de vis, où la longueur (L) est supérieure à D_{K}/3, où un angle d'arête (alpha), inclus par la tangente (T) sur la gaine de vis au niveau de la première arête (20) avec la ligne de contour (K), augmente également sur la longueur (L) dans cette zone à mesure que la distance de la courbe d'intersection (S) par rapport à l'axe médian (MA) s'accroît.

2. Vis selon la revendication 1, **caractérisée en ce que** la longueur (L) est supérieure à D_{K}/2.

3. Vis selon l'une des revendications précédentes, **caractérisée en ce que** la ligne de contour (K) est sensiblement linéaire ou convexe.

4. Vis selon l'une des revendications précédentes, **caractérisée en ce que** la pointe présente une forme de base, notamment conique, de sorte que, en section transversale, les arêtes sont reliées de manière circulaire sur le côté opposé à la ligne de contour.

5. Vis selon l'une des revendications précédentes, **caractérisée en ce que** l'augmentation de la distance (A) de la courbe d'intersection (S) s'effectue en continu au moins à partir de la moitié de la pointe de vis en direction de la tête.

6. Vis selon l'une des revendications précédentes, **caractérisée en ce que** l'augmentation continue de la distance (A) de la courbe d'intersection (S) s'étend au moins sur une longueur axiale d'une fois le diamètre central D_{K}.

7. Vis selon l'une des revendications précédentes, **caractérisée en ce que**, en partant de la pointe avancée (16), la distance des arêtes (20, 22) jusqu'au plan médian augmente en direction de la tête.

8. Vis selon l'une des revendications précédentes, **caractérisée en ce que** la courbe d'intersection présente dans la zone de la distance (A2) de D_{K}/2 une telle hausse que la tangente inclut un angle de sortie avec l'axe médian de vis (MA) qui est inférieur à 45°.

9. Vis selon l'une des revendications précédentes, **caractérisée en ce que** la distance (A) de la courbe d'intersection (S) par rapport à l'axe médian au niveau de l'extrémité tournée vers la pointe avancée (16) est inférieure ou égale à 25 %, en particulier inférieure ou égale à 15 %, en particulier inférieure ou égale à 10 %, en particulier inférieure ou égale à 5 % du diamètre central D_{K}.

10. Vis selon l'une des revendications précédentes, **caractérisée en ce que**, dans la zone de distance (A) de la courbe d'intersection (S) de 0,4 D_{K} à 0,5 D_{K}, la courbe d'intersection (S) se situe dans la zone de support et il y apparaît une action de refoulement du matériau éliminé aussi bien dans le sens de refoulement (V) vers l'extérieur que dans le sens longitudinal en direction de la tête.

11. Vis selon l'une des revendications 2 à 10, **caractérisée en ce que** la zone d'augmentation continue de la distance (A) de la courbe d'intersection (S) suit un rayon de cercle.

12. Vis selon l'une des revendications précédentes, **caractérisée en ce que**, dans le prolongement de la courbe d'intersection (S) au-delà de la distance radiale D_{K}/2, le filetage est également évidé dans la zone de support de la tige (12) de manière correspondante.

13. Vis selon l'une des revendications précédentes, **caractérisée en ce que** la courbe d'intersection (S) atteint la distance D_{K}/2 par rapport à l'axe médian en un point qui se situe dans la partie cylindrique de la tige.

14. Vis selon l'une des revendications précédentes, **caractérisée en ce que** le filetage possède une pente (P) et la distance (AK) depuis la transition de la pointe de vis à la zone de support jusqu'au point où la courbe d'intersection (S) atteint la distance D_{K}/2 par rapport à l'axe médian (MA) est jusqu'à 10 fois, en particulier jusqu'à 8 fois la pente (P), en particulier jusqu'à 6 fois, en particulier jusqu'à 2,5 fois, en particulier jusqu'à environ 1 fois la pente du filetage.

15. Vis selon la revendication 14, **caractérisée en ce qu'**il résulte un rapport d'action de la distance (AK) sur la pente de filetage (P) d'entre 3 et 6, la distance (AK) entre la transition de la pointe de vis à la zone de support et le point, où la courbe d'intersection (S) atteint la distance D_{K}/2 par rapport à l'axe médian (MA), en résultant.
